# EUROPEAN PATENT APPLICATION

(11) **EP 0 980 892 A1**
(43) Date of publication of application: **23.02.2000**
(21) Application number: 99116134.0
(22) Date of filing: 19.08.1999
(51) Int. Cl.: C08L 23/08, C08L 23/14, C08L 23/16, C08L 53/00, A61J 1/00

(54) **Molded product for medical use from a resin composition comprising a polyolefin resin and a specific block terpolymer**

(30) Priority: 19.08.1998 JP 23333498; 28.08.1998 JP 24362698
(71) Applicant: Nissho Corporation, Osaka-shi, Osaka-fu, 531-8510 (JP)
(72) Inventor: Fukushima, Hiroshi, Kita-ku, Osaka-shi, Osaka-fu 531-8510 (JP); Takahashi, Hidenori, Kita-ku, Osaka-shi, Osaka-fu 531-8510 (JP); Kawamura, Shin-ichi, Kita-ku, Osaka-shi, Osaka-fu 531-8510 (JP)
(74) Representative: Albrecht, Thomas, Dr.

(57) **Abstract**

Molded products for medical use which are to be sterilized, such as bags for blood transfusion or fluid therapy, tubes such as syringes, tubes for transfusion, tubes for blood circuits, catheters, or the like are provided. The molded products comprise of a resin composition which is a mixture of (A) polyolefin resin and (B) a hydrogenated product of a block terpolymer of a cyclic conjugated diene monomer, linear conjugated diene monomer and cyclic conjugated diene monomer, wherein said (B) hydrogenated product comprises 30 to 90% by weight of said linear conjugated diene polymer block, and a ratio of (A)/(B) is 50/50 to 95/5 by weight. These products have an excellent high-pressure vapor sterilization resistance, transparency, flexibility and, if necessary, an easy-peelability.

## Description

### Field of the Invention

The present invention relates to molded products essentially comprising a polyolefin resin and a specific block terpolymer used in medical, hygienic and pharmaceutical fields. Such molded products which are to be sterilized include containers such as bags for blood transfusion or fluid therapy, tubes such as syringes, tubes for transfusion, tubes for blood circuits, catheters, or injection molded parts such as stoppers, or a wide variety of constituent parts, containers or packages of apparatus used in such applications. The molded products in the present invention have an excellent high-pressure vapor sterilization resistance, transparency, flexibility and, if necessary, an easy-peelability.

In this specification, the term "easy-peelability" means the property of being capable of selectively forming a strongly sealed portion and a relatively weak sealed portion between two members made of one material; that is, a strongly sealed portion formed by thermally welding two members at a relatively high temperature that cannot be peeled and opened and a weakly sealed portion formed by thermally welding two members at a relatively low temperature that can be easily separated (to be referred to as "low-temperature welding" hereinafter).

### Background of the Invention

Heretofore, many plastic molded products have been used in medical, hygienic and pharmaceutical fields because they have such advantages that they are light in weight, difficult to be damaged, unlike metal or glass and, at relatively low cost, can be processed into various forms such as bottles, films, sheets or tubes and can also be used in disposable products. In medical, hygienic and medicinal fields as compared with other fields, characteristics that are very important are that the molded products have high medical safety such as less elution of raw material-components, that they are durable against sterilization such as high-pressure steam sterilization, radiation sterilization and ethylene oxide gas sterilization, that their wastes after use are easily treated, and so on. Further, according to the uses, high transparency of the molded products is also very important.

Vessels or packages for containing medicine, etc. such as transfusion bags are required to maintain sterility of the contained products for a long period of time, to have strength or impact resistance against external impact, and to give no environmental adverse effect during waste disposal. Depending on the contained product, they may also be required to have vacuum maintaining properties, gas impermeability or steam impermeability. Further, vessels which are to contain products which need to be subjected to high-pressure steam sterilization such as injection drugs or transfusion fluids are required to have heat resistance such that they can endure sterilization at a temperature of at least 105°C or more, preferably 121°C or more.

Heretofore, polyolefin resins, for example, polypropylene resins, polyethylene resins, ethylene-vinylacetate copolymers, etc., have been essentially used as materials for such use.

In the case of tubes for transfusion sets, circuit tubes such as blood circuits for artificial kidneys, indwelling needles, various catheters, etc., art appropriate strength, flexibility and elasticity of the tubes are necessary in addition to medical safety depending on their applications. For example, transparency, flexibility or resistance to kink is an important factor for circuit tubes. As for tubes for pumps, elasticity is also an important factor. As for a cardiovascular catheter or angiographic catheter, appropriate stiffness and flexibility are necessary for torque transmission of the catheter tip or its advancing in blood containers. When the tube is used with positioning in a blood container or a living body such as a venous or arterial catheter etc., an anti-thrombogenic property and biocompatibility are further required.

As plastic materials for such tubes, polyolefin resins, for example, polyethylene resins, polypropylene resins, etc. have essentially been used, and ethylene-vinylacetate copolymers, etc. have been proposed.

However, with these polyolefin resins, it has been difficult to obtain excellent molded products satisfying all characteristics of flexibility, heat resistance, impact resistance and disposability required as products for medical use.

While polyethylene resins generally have excellent impact resistance, flexibility and transparency, because of the low melting point temperature thereof, they have difficulty in being subjected to high-pressure steam sterilization at a temperature of 110°C or more when used alone. It is thus needed to decrease the sterilization temperature or to extend the sterilization time. As the density of the resin increases, heat resistance thereof improves, while transparency or flexibility is impaired.

Polypropylene resins have higher softening point temperatures and higher heat resistance compared with polyethylene resins, but they have insufficient flexibility and impact resistance especially at low temperatures because of high elasticity thereof when they are molded alone for a non-rigid bag, film, tube, etc. It is thus needed to use them as a blend with other non-rigid plastic materials or elastomers, or as a multi-layer molded product.

While ethylene-vinylacetate copolymers have excellent transparency and flexibility, they have low heat resistance and a problem that the acetate component thereof elutes during heating or sterilizing. For improving heat resistance, crosslinking of the copolymer by electron ray exposure is additionally needed.

In the above mentioned molded products for medical use, heretofore, a multi-chamber container which is partitioned by an easily peelable seal zone has been used. And lid materials and packaging materials for implements in which an easy-peelable adhesive area is formed by low-temperature welding can be easily opened.

The multi-chamber container for medical use is used to maintain a solid medicine and/or a liquid medicine separately and to sterilely mix them just before use when the qualities of the medicines are deteriorated by denaturation during preserving in a mixed state. In the multi-chamber container medicines are stored separately in a plurality of chambers defined by easily peelable seal zone and are mixed together sterilely by peeling the seal zone by compressing the container by hand just before use and connecting the plurality of chambers to one another.

This multi-chamber container is generally formed from a single-layer film having easy-peelability or a multi-layer film of which the innermost layer is a film having easy-peelability. A peripheral portion of the film is sealed firmly at a relatively high temperature to form a container, and the formed container is then welded in a heating mold from the outside at a relatively low temperature to form an easily peelable seal zone, thereby defining a plurality of chambers. When the multi-chamber container is formed from a film not having easy-peelability, an easy-peelable seal zone of the container can be formed by inserting an easy-peelable film, which is formed from a mixture of a resin used in the container and a resin having no compatibility with the resin, between two film layers of the container and thermally welding them.

The easy-peelable film for medical containers must have heat resistance, transparency, flexibility and impact resistance in addition to medical safety and disposability. There have been many proposals for this peelable film.

For example, US 4,961,495 discloses a plastic container having an easy-peelable seal forming compartments therein in which a resin composition comprises a linear low density polyethylene resin having a lower melting starting temperature and a polypropylene resin having a melting point starting temperature at least 8°C higher. However, as mentioned above, the easy-peelable seal comprising a polyethylene resin is not stable at a sterilization temperature and physical properties of the container will be changed.

Further, Japanese Laid-open Patent Publication Nos. 7-136234 and 8-131515 disclose an easy-peelable film made from a mixture of a polypropylene polymer and ethylene α-olefin-based elastomer. Japanese Laid-open Patent Publication Nos. 8-229099 and 8-229100 disclose a film made from a mixture of a polypropylene as a main component and a styrene-based elastomer, and a mixture of a polyethylene as a main component and a styrene-based elastomer, respectively. However, the elastomer components of these films have low heat resistance, which causes changes and differences in the peel strength of the formed barriers, thereby making it impossible to carry out high-pressure steam sterilization at a temperature no less than 115°C.

And Examined Japanese Patent Publication No. 7-96283 discloses an easy-peelable film made from a resin composition comprising a polyolefin resin and a non-compatible resin having excellent heat resistance such as a polymethypentane resin. However, when the proportion of the non-compatible resin is relatively larger than the polyolefin resin, transparency and flexibility of the peelable film deteriorate, thereby making it unsuitable for use in medical containers.

The main object of the present invention is to provide improvement in the inherent property of polyolefin resin, to widely control stiffness and flexibility thereof, and further to provide a molded product for medical use having excellent transparency, heat resistance, resistance to sterilization and being medically safe. Such molded products are particularly containers such as transfusion bags, tubes such as tubes for transfusion sets, tubes for blood circuits, or tubes for various catheters, and injection molded products such as stoppers of the implements above.

It is another object of the present invention which has been made in view of the above situation to provide an easy-peelable film which has excellent transparency and flexibility and does not experience a change in peel strength even in a high-temperature sterilized atmosphere as well as to provide a flexible container comprising the same.

### Summary of the Invention

The inventors of the present invention have conducted various intensive studies to attain the above-described object and have found that the above-described objects can be attained by using a polyolefin resin mixed with a cyclic olefin-based resin having a specific formulation and properties, thereby achieving the present invention.

That is, an embodiment of the present invention is a molded product for medical use comprising a molded product of a resin composition which is a mixture of (A) polyolefin resin and (B) a hydrogenated product of a block terpolymer of a cyclic conjugated diene monomer, linear conjugated diene monomer and cyclic conjugated diene monomer, wherein said (B) hyderogenated product comprises 30 to 90% by weight of said linear conjugated diene polymer block, and wherein a ratio of (A)/(B) is 50/50 to 95/5 by weight.

In another embodiment of the present invention, a molded product for medical use is characterized by a multi-layer molded product in which at least one layer is molded from a resin composition obtained by mixing (A) polyolefin resin and (B) hydrogenated product of a block terpolymer of a cyclic conjugated diene monomer, linear conjugated diene monomer and cyclic conjugated diene monomer, wherein said (B) hydrogenated product comprises 30 to 90% by weight of a linear conjugated diene polymer block, and wherein a ratio of (A)/(B) is 50/50 to 95/5 by weight.

In another embodiment of the present invention, an easy-peelable film is characterized by being molded from a resin composition obtained by mixing (A) polyolefin resin and (B) a hydrogenated product of a block terpolymer of a cyclic conjugated diene monomer, linear conjugated diene monomer and cyclic conjugated diene monomer, wherein said (B) hydrogenated product comprises 30 to 90% by weight of a linear conjugated diene polymer block, and wherein a ratio of (A)/(B) is 50/50 to 95/5 by weight.

Another embodiment of the present invention provides a flexible container having easy-to-peel openability characterized by being molded from a resin composition obtained by mixing (A) polyolefin resin and (B) hydrogenated product of a block terpolymer of a cyclic conjugated diene monomer, linear conjugated diene monomer and cyclic conjugated diene monomer, wherein said (B) hydrogenated product comprises 30 to 90% by weight of a linear conjugated diene polymer block, and a ratio of (A)/(B) is 50/50 to 95/5 by weight.

### Brief Description of the Drawings

Fig. 1 shows a sectional view of an example of the easy-peelable film of the present invention.
Fig. 2 shows a front view of an example of the flexible container of the present invention.
Fig. 3 shows a sectional view cut on line X-X of the flexible container shown in Fig. 2.
Fig. 4 shows an enlarged sectional view of a peelable portion of the flexible container shown in Fig. 3.
Fig. 5 shows a front view of another example of the flexible container of the present invention.

### Detailed Description of the Invention

In the present invention, the term "polyolefin resins" means resins which are polymerized with an olefin monomer such as propylene, ethylene or butene and can be selected according to the required performance of a product such as heat resistance, flexibility and transparency. The resins may be used alone or in admixture of a plurality of polyolefin resins in consideration of their crystallinity, noncrystallinity and elasticity. Since the resins to be mixed together must have heat resistance to stand high-pressure steam sterilization without deforming or blocking, they preferably have a Vicat softening point of 100°C or more, preferably 110°C or more, and more preferably 120°C or more. The polyolefin resins useful in the present invention preferably have a melting point of 170 to 220°C and a molecular weight of about 10,000 to 5,000,000.

Illustrative examples of the polyolefin resins useful in the present invention include polypropylene resins including polypropylene homopolymers such as isotactic polypropylene, syndiotactic polypropylene and atactic polypropylene, polyethylene resins, propylene α-olefin copolymers or ethylene α -olefin copolymers having at least one α-olefin monomer such as ethylene, propylene, butene, pentene, hexene, heptene, octene or 4-methylpentene-1, ethylene vinylacetate copolymers, ethylene vinylalcohol copolymers, ethylene acrylic acid copolymers, cyclic polyolefin resins and the like. Propylene α-olefin copolymer or ethylene propylene copolymer elastomer is preferred. A blend of two or more of the above polymers and resins may be used. Combinations including polypropylene resins and propylene α-olefin copolymers are preferred.

In the present invention, the term "block terpolymer of a cyclic conjugated diene monomer, linear conjugated diene monomer and cyclic conjugated diene monomer" means a terpolymer comprising two block units formed by the cyclic conjugated diene monomer and one block unit formed by the linear conjugated diene monomer. The block terpolyer and hydrogenated terpolymer thereof are disclosed in US 5,830,965 and US 5,883,192 which are incorporated herein by reference.

Further, the number average molecular weight of the terpolymer is from 10,000 to 5,000,000, preferably 15,000 to 5,000,000, and more preferably 20,000 to 3,000,000. When the number average molecular weight is less than 10,000, a very fragile solid or viscous liquid is obtained. When the number average molecular weight exceeds 5,000,000, the melt viscosity becomes too high, thereby making molding difficult. The molecular weight distribution (Mw/Mn) which is obtained from the number average molecular weight (Mn) and the weight average molecular weight (Mw) is preferably in the range of 1.01 to 10, and more preferably 1.05 to 5.0. The terpolymer of the present invention preferably has a softening point of 130 to 170°C.

In the present invention, the cyclic conjugated diene monomer includes a cyclic conjugated diene monomer having a 5- to 8-membered ring formed by carbon-carbon bonds. Illustrative examples of the cyclic conjugated diene monomer include cyclopentadiene, cyclohexadiene, cycloheptadiene and cyclooctadiene. Particularly preferred is a stable cyclic conjugated diene-based monomer having a 6-membered ring exemplified by 1,3-cyclohexadiene and 1,4-cyclohexadiene. Of these, 1,3-cyclohexadiene is particularly preferred.

The linear conjugated diene monomer is a linear conjugated diene compound having 3 or more carbon atoms exemplified by isoprene, 1,3-butadiene, 2,3-dimethyl-1,3-butadiene, 1,3-pentadiene and 1,3-hexadiene, etc. Isoprene and 1,3-butadiene are preferred, and 1,3-butadiene is particularly preferred.

Polymerization may occur at any diene portion of the monomers. For example, the ratios of the 1,2-bonds and 1,4-bonds of 1,3-butadiene in the polymer may be optionally changed according to the reaction conditions of the polymerization.

The term "cyclic conjugated diene polymer block" means a structural unit of a polymer obtained by vinyl polymerization of a cyclic conjugated diene monomer, for example, which has a molecular structure such that two carbons of 1,3-cyclohexadiene are 1,2-bonded or 1,4-bonded.

The term "linear conjugated diene polymer block" means the structural unit of a polymer obtained by vinyl polymerization of a linear conjugated diene monomer, as exemplified by polybutadiene and/or polyisoprene, polymerization of the monomer may occur at any diene portion. For example, in the case of 1,3-butadiene, the ratios of the 1,2-bonds and 1,4-bonds may be optionally changed according to the reaction conditions of the polymerization.

The proportion of the linear conjugated diene polymer block in the block terpolymer is 30 to 90 % by weight. When the proportion of the linear conjugated diene polymer block is less than 30 % by weight, a molded product made from a mixed resin with a polyolefin resin has high stiffness and poor flexibility and elasticity and is hardly usable as a molded product for medical use such as bag or tube. When the proportion exceeds 90 % by weight, the effect of the cyclic conjugated diene polymer block, such as heat resistance, may disadvantageously not be fully obtained.

In the present invention, the block terpolymer of a cyclic conjugated diene monomer, linear conjugated diene monomer and cyclic conjugated diene monomer must be saturated by hydrogenating part or all of the carbon-carbon unsaturated bonded portions. A hydrogenation reaction is carried out after the block terpolymer of a cyclic conjugated diene, linear conjugated diene and cyclic conjugated diene is obtained. The hydrogenation reaction is carried out by maintaining a polymer solution obtained after a polymerization reaction at a predetermined temperature in a hydrogen or inert gas atmosphere, adding a hydrogenation catalyst under agitation or without agitation and introducing hydrogen gas to increase the pressure to a predetermined level.

Illustrative examples of an organic metal catalyst used in the hydrogenation reaction include alkyl lithium such as methyl lithium, ethyl lithium, n-propyl lithium, isopropyl lithium, n-butyl lithium, t-butyl lithium, pentyl lithium and hexyl lithium, phenyl lithium, cyclopentadienyl lithium, alkyl magnesiums such as dimethyl magnesium and diethyl magnesium, and alkyl aluminum such as trimethyl aluminum, triethyl aluminum and triisopropyl aluminum.

Hydrogenation can be carried out on the linear conjugated diene polymer blocks alone or on both the cyclic conjugated diene polymer blocks and the linear conjugated diene polymer block. The hydrogenated product is preferably a completely hydrogenated product obtained by hydrogenating both the cyclic conjugated diene blocks and the linear conjugated diene block. The hydrogenation percentage is at least 90% based on carbon-carbon unsaturated bonds present in the skeletal chain of the block terpolymer. When the hydrogenation percentage is lower than 90%, there is a tendency toward reduction in heat resistance and weatherability at the time of sterilization or molding because of an increase of unsaturated bond portions.

Particularly preferred methods of producing the block terpolymer of a cyclic conjugated diene, linear conjugated diene and cyclic conjugated diene are disclosed in US 5,830,965 and US 5,883,192 which methods are incorporated herein by reference.

Stated more specifically, living anion polymerization is carried out using an organic metal complex compound produced by reacting a complexing agent as a polymerization catalyst, preferably by reacting an amine with an organic metal compound containing the 1A group metal of the periodic table such as n-butyl lithium. The obtained polymer is hydrogenated as required. A polymer having a desired molecular weight and molecular weight distribution can be obtained by this living anion polymerization.

The polymerization reaction may be carried out by first polymerizing a cyclic conjugated diene monomer to obtain a cyclic conjugated homopolymer, copolymerizing the homopolymer with a linear conjugated diene monomer and then copolymerizing the obtained copolymer with a cyclic conjugated diene monomer. Alternatively, the polymerization reaction may be carried out by terpolymerizing a di-block copolymer of a cyclic conjugated diene polymer block and a linear conjugated diene diblock through a coupling reaction between the terminals of a linear conjugated diene polymer block.

The block terpolymer of the present invention may be copolymerized with a small amount of saturated cyclic olefin having 5 to 8 carbon atoms such as cyclopentene, cyclohexene, cycloheptene or cyclooctene as required. The block terpolymer of the present invention may further be copolymerized with a small amount of an α-olefin having 2 to 8 carbon atoms such as ethylene, n-propylene, isopropylene, n-butylene, isobutylene, pentene, hexene, heptene or octene as required.

Further, the block terpolymer of the present invention may be modified by partially adding a functional group or the residual group of an organic compound having the functional group. The functional group or the residual group of the organic compound may be added to the polymer terminal(s) of the polymer by living anion polymerization. The added amount of the functional group or the residual group of the organic compound having the functional group is preferably in the range of 0.1 to 20 % by weight based on the polymer containing a modified cyclic molecular structure unit. Illustrative examples of the functional group include maleic anhydride, acrylic acid, methacrylic acid, methyl methacrylate, dimethyl amide and diethylene acrylamide. The modified terpolymer are useful for a blend with a polyamide having a polar functional group and an ethylene vinylalcohol copolymer and increasing the number of layers. These functional groups or the organic compounds having the functional groups may be used alone or in combination of two or more.

The resin composition of the present invention is obtained by mixing the (A) polyolefin resin and the (B) hydrogenated product of a block terpolymer of a cyclic conjugated diene monomer, linear conjugated diene monomer and cyclic conjugated diene monomer, wherein said (B) hydrogenated product comprises 30 to 90% by weight of a linear conjugated diene polymer block, and wherein a ratio of (A)/(B) is 50/50 to 95/5 by weight.

When the proportion of the (B) hydrogenated product of the block terpolymer exceeds 50 % by weight based on the resin composition, particularly when the proportion of the linear conjugated diene polymer exceeds 50 % by weight based on the weight of the resin composition, it becomes an elastomer. Therefore, the merits of the polyolefin resin as a main component cannot be utilized. That is, tackiness of the molded product becomes so high such that a blocking phenomenon occurs among these products, or the stiffness becomes so low as to produce a bag or tube not having an adequate strength.

When the proportion of the hydrogenated product of the block terpolymer is less than 5 % by weight based on the resin composition, the block terpolymer does not show characteristics of improvement in flexibility and heat resistance.

To form and process the molded product of the present invention, conventionally known additives such as a thermal stabilizer, antioxidant and ultraviolet absorbent are used. The additives are generally contained in an amount of 0.001 to 10 % by weight based on the resin composition. They may be added at the time of purification after a polymerization reaction or at the time of processing.

Additives such as lubricants, antiblocking agents, antistatic agents, pigments and anti-fungus agents may be used according to the application purpose and processing conditions of the formed products if they are within the ranges of conditions of the present invention.

Methods for producing molded products for medical use of the present invention include extrusion molding (tube molding, inflation molding, T-die molding, etc.), blow molding, injection molding, vacuum molding, press molding, calendar molding, solution cast molding, etc.

The molded products for medical use of the present invention are provided in the form of films, sheets, tubes, bags or various shapes of injection molded products, and used as implements for blood transfusion, transfusion, collecting blood, circulating liquid extracorporeally, transporting powdery or liquid medicines, preserving medicines, or keeping wastes of liquid medicines and for packaging for implements thereof or for various medicines.

Another embodiment of the present invention is a molded product for medical use characterized by a multi-layer molded product in which at least one layer is molded from a resin composition obtained by mixing (A) polyolefin resin and (B) hydrogenated product of a block terpolymer of a cyclic conjugated diene monomer, linear conjugated diene monomer and cyclic conjugated diene monomer, wherein said (B) hydrogenated product comprises 30 to 90% by weight of a linear conjugated diene polymer block, and wherein a ratio of (A)/(B) is 50/50 to 95/5 by weight.

The multi-layer molded product of the present invention comprises two layers or three or more layers. The multi-layer molding method includes coextrusion molding, dry laminate molding, laminate molding, etc.

The multi-layer molded product has a thickness in the range of from 0.01 to 10mm as a whole. The kind and formulation of resin used in each layer, and layer thickness can be optionally controlled according to the intended application thereof.

For the multi-layer molded product of the present invention, for example, in the case of a non-rigid container such as a transfusion bag or a circuit tube in which flexibility and elasticity are critical, it is effective to use a hydrogenated product of a block terpolymer of cyclic conjugated diene monomer, linear conjugated diene monomer and cyclic conjugated diene monomer having high flexibility at least as the intermediate layer. In this case, the linear conjugated diene polymer block content is required to be 30 to 90 % by weight, preferably 50 to 80 % by weight.

The multi-layer molded product is provided in the form of films, sheets, tubes or bags, and used as an implement for blood transfusion, transfusion, collecting blood, circulating medicines extracorporeally, transporting powdery or liquid medicines, preserving medicines, or keeping waste liquids of medicines etc., or for packaging for implement thereof or for medicine.

In another embodiment of the present invention, an easy-peelable film is characterized by being molded from a resin composition obtained by mixing (A) polyolefin resin and (B) hydrogenated product of a block terpolymer of a cyclic conjugated diene monomer, linear conjugated diene monomer and cyclic conjugated diene monomer, wherein said (B) hydrogenated product comprises 30 to 90% by weight of a linear conjugated diene polymer block, and wherein a ratio of (A)/(B) is 50/50 to 95/5 by weight.

Examples of the present invention will be described hereinunder with reference to the accompanying drawings.

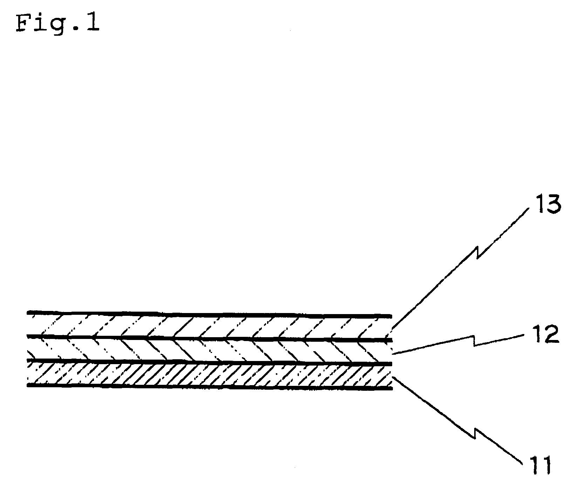

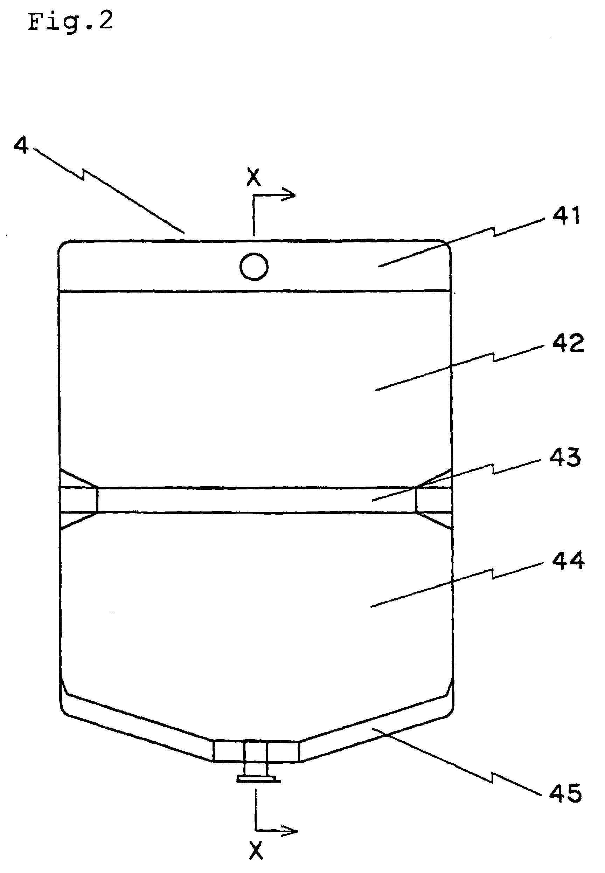

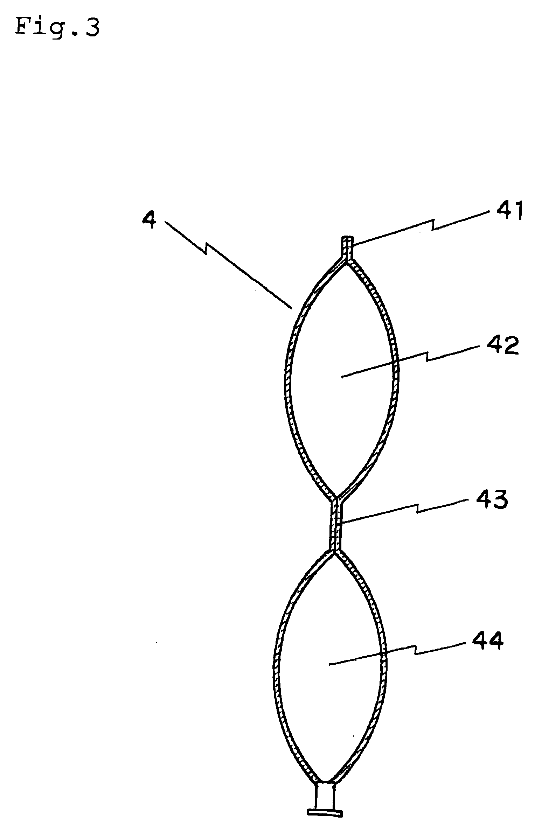

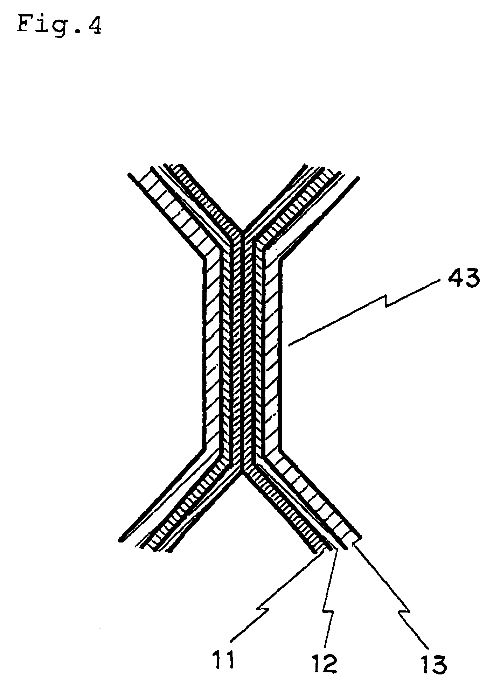

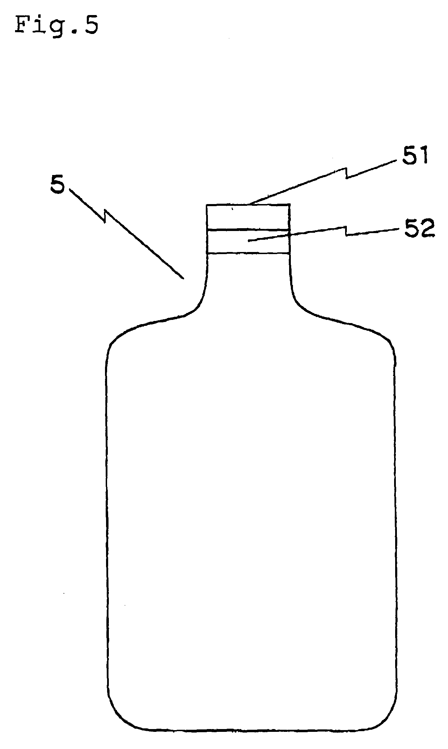

Fig. 1 is a sectional view of an example (three-layer structure) of an easy-peelable film of the present invention. Fig. 2 is a plane view of an example of a flexible container of the present invention (comprising the film shown in Fig. 1), Fig. 3 is a sectional view along line X-X of Fig. 2, and Fig. 4 is an enlarged sectional view of a seal zone portion shown in Fig. 3. Fig. 5 is a sectional view of another example of a flexible container of the present invention.

The easy-peelable film of the present invention may be a single-layer film or multi-layer film consisting of an easy-peelable film 11 and other resin films 12 and 13 as shown in Fig. 1. Since a medical container such as a transfusion container must have transparency and flexibility, a multi-layer film comprising an easy-peelable film 11 as thin as possible is preferably used as an inner wall layer. In this case, the thickness of the inner wall layer is preferably 30 to 70 µm, more preferably 30 to 50 µm.

In the case of a multi-layer film, the resin of the base material layers 12 and 13 can be a polyolefin resin such as a polypropylene resin, propylene α-olefin copolymer, polyethylene resin, ethylene α-olefin copolymer, α-olefin resin exemplified by polybutene, cyclic polyolefin resin, ethylene vinylalcohol copolymer or ethylene vinylacetate copolymer, a thermoplastic resin such as a polyamide resin or polyester resin, or a blend thereof. When medical safety and disposability are taken into consideration, a polyolefin resin is preferred, with propylene α-olefin copolymer or ethylene propylene copolymer elastomer being most preferred.

When the easy-peelable film 11 of the present invention is a single-layer film, it can be produced by a molding method used for general thermoplastic resins, such as T-die molding or inflation molding. When the easy-peelable film of the present invention is a multi-layer film, it can be produced by coextrusion molding, dry lamination, extrusion coating or the like. The flexible container can be produced from the above easy-peelable film by blow molding, vacuum molding or the like.

The multi-chamber container 4 shown in Fig. 2 is produced from a three-layer inflation film shown in Fig. 1. In the multi-chamber container 4, an easily peelable seal zone 43 and firmly sealed end portions 41 and 45 are formed by changing thermal welding conditions such as temperature, pressure and time period. In Fig. 2, reference numerals 42 and 44 denote chambers for storing a liquid medicine or powdery medicine.

To form the easily peelable seal zone 43, thermal welding is preferably carried out at a temperature higher than the softening temperature of the hydrogenated product of the terpolymer (B) having a relatively low melting point and lower than the melting point of the polyolefin resin (A) having a relatively high melting point, specifically about 130 to 170°C (depending on the components of the resin used, the specifications of a welding machine, and welding conditions). By thermal welding under the above conditions, a weakly sealed portion having a T-peel strength of 0.1 to 1.0 kg/15 mm, preferably 0.1 to 0.8 kg/15 mm, and morepreferably 0.2 to 0.6 kg/15 mm is obtained. The T-peel strength is measured using an Instron universal tester in such a way that a short slip laminated test sample at a peel-off angle is 180° , tensile speed of 300 mm/min. When the multi-chamber container is produced by thermally welding to achieve the above T-peel strength, the weakly sealed portion can be peeled by compressing the multi-chamber container by hand and the two chambers can be communicated with each other.

To form the firmly sealed end portions 41 and 45 in the multi-chamber container, thermal welding is preferably carried out at a temperature higher than the melting point of the resin (A), specifically at about 170 to 220°C. Thermal welding conditions such as temperature, pressure and time period must be selected suitably according to the molding method, the thickness of the seal zone 43 and whether the peelable film has a single-layer or multi-layer structure.

The flexible container produced by the above method, for example, a transfusion bag 4, is sealed up after medicines are stored in the chambers 42 and 44 and is subjected to high-pressure steam sterilization. Compared with a conventional flexible container which can stand a sterilization temperature of up to 115°C, the flexible container of the present invention experiences no change in peelability and transparency even when it is sterilized at a temperature higher than 115°C, thereby making it possible to reduce sterilization time.

Since the easy-peelable film 11 of the present invention can be inserted between defined portions of a flexible single-chamber container which is formed from a film not having easy-peelability, and is thermally welded at a relatively low temperature from the outside, it can be used as a weakly adhesive sheet.

The easy-peelable film of the present invention can be used for a container 5 having an easily peelable seal zone 52 in a mouth portion 51 as shown in Fig. 5 and peel-off type packaging films in addition to a multi-chamber container 4 as shown in Figs. 2 to 4.

### Reference Example 1:

### Preparation and evaluation of block terpolymer

### 1) Preparation of block terpolymer of cyclohexadiene, butadiene and cyclohexadiene (CHD/Bd/CHD ratio of 15/70/15 by weight)

The inside of a 5-liter high-pressure autoclave equipped with a stirrer is fully dried and substituted by nitrogen gas. 2,700 g of cyclohexane is charged into the autoclave as a polymerization solvent and maintained at room temperature. Thereafter, n-butyl lithium is added in an amount of 30 mmol in terms of the amount of lithium atom, and 37.5 mmol of N, N, N', N'-tetramethylethylene diamine is added and stirred at room temperature for about 10 minutes.

Thereafter, 45 g of 1,3-cyclohexadiene (CHD) is introduced into the autoclave and polymerized at 400°C for 1 hour. And 700 g of 30 wt% cyclohexane solution of butadiene (210 g of Bd) is charged into the autoclave and polymerized at 40°C for 3 hours to obtain a CHD-Bd block copolymer.

Further, 45 g of 1,3-cyclohexadiene (CHD)is charged into the autoclave and polymerized at 40°C for 3 hours. After the end of polymerization, the obtained polymerization reaction solution is supplied to another 5-liter high-pressure autoclave which is thoroughly dried in accordance with a commonly used method, and anhydrous n-heptanol is added in the same molar amount as the lithium atoms to stop the polymerization reaction.

After butyl hydroxytoluene is added as an antioxidant to the polymer solution in accordance with a commonly used method, the solvent is removed with a large amount of methanol to obtain a CHD-Bd-CHD block terpolymer.

When the block terpolymer obtained by the above -described production process is measured by ¹H-NMR (JEOL α-400 NMR apparatus of JEOL Ltd., measurement frequency of 400 MHz), the molar ratios of the 1,2-bonds to the 1,4-bonds of the polycyclohexadiene block (PCHD) and a polybutadiene block (PBd) are 1/1 and 3/1, respectively.

### 2) Hydrogenation of CHD-Bd-CHD block terpolymer

The inside of a 4-liter high-pressure autoclave equipped with a stirrer is dried and substituted by nitrogen in accordance with a commonly used method. 1,000 g of cyclohexane is charged into the autoclave as a solvent and maintained at 70°C in a nitrogen gas atmosphere. 1,000 g of a 10 wt% cyclohexane solution of the polymer obtained in above producing step 1) is charged into the autoclave, and 10 g of a catalyst immobilized 5 % by weight of palladium (Pd) with alumina (Al₂O₃) is added. The inside of the autoclave is substituted by nitrogen gas and then heated to 160°C. A hydrogenation reaction is carried out at a hydrogen pressure of 55 kG/cm²G for 6 hours.

After the hydrogenation reaction is finished, the inside of the autoclave is cooled to room temperature, reduced to normal pressure, and then substituted by nitrogen gas. Butyl hydroxytoluene is added as an antioxidant to the polymer solution in accordance with a commonly used method, and the solvent is removed with a large amount of methanol to obtain a hydrogenated productof the CHD-Bd-CHD block terpolymer.

When the hydrogenated product of the block terpolymer obtained by the above-described producing steps 1) and 2) is measured by ¹H-NMR (JEOL α-400 NMR apparatus of JEOL Ltd., measurement frequency of 400 MHz), the hydrogenation rate is 100%.

Other terpolymers as listed in Table 1 were prepared by methods similar to that described above.

### 3) Evaluation of block terpolymer and hydrogenated product thereof

Block terpolymers and hydrogenated products thereof are measured by the following methods in terms of the number average molecular weight, density, flexural modulus and stiffness. Results are shown in Table 1.

### (a) Number average molecular weight

The number average molecular weight is measured in terms of the amount of standard polystyrene by G.P.C. (gel permeation chromatography) using a liquid chromatograph (HLC-8082) of Toso Co., Ltd. and a column (Showdex: K805 + K804K802) of Showa Denko K.K.

### (b) Density

The density is measured in accordance with JIS K-6258 using an automatic specific gravity meter (D-H) of Toyo Seiki Co., Ltd.

### (c) Flexural modulus The flexural modulus is measured in accordance with ASTM D790

using a tensile tester (AG-500D) of Shimadzu Corporation.

### (d) Stiffness measurement

JIS-A hardness is measured in accordance with JIS K6301 using a rubber hardness meter (GS-706) of Teclock Co., Ltd.

**Table 1**

| Abbreviation | Resin constituents |
|---|---|
| C0 (Comparative Example) | Block terpolymer of PCHD (15) - PBd (70) -PCHD (15) (MW:57,300, density: 0.94, flexural modulus: N.D, stiffness:73) |
| C1 (Comparative Example) | Block terpolymer of PCHE (45) - PEB (10) -PCHE (45) (MW:46,500, density: 0.98, flexural modulus: 2,480 Mpa) |
| C2 (Example) | Block terpolymer of PCHE (15) - PEB (70) -PCHE (15) (MW:44,500, density:0.96, flexural modulus: 1,100 Mpa) |
| C3 (Example) | Block terpolymer of PCHE (15) - PEB (70) -PCHE (15) (MW:57,000, density: 0.91, flexural modulus: N.D: stiffness:73) |
| C4(Example) | Block terpolymer of PCHE (35)-PEB (30)-PCHE (35) (MW: 44,500, density: 0.96, flexural modulus: 1,100 MPa) |
| PCDH: poly 1,3-cyclohexadiene (=polycyclohexene) PBd: polybutadiene PCHE: hydrogenated poly 1,3-cyclohexadiene PEB: hydrogenated polybutadiene (=ethylene-butylene copolymer) N.D: not detectable | |

Resins shown in Table 2 are prepared for use as the films of examples in the present invention and comparative examples and the same measurements are made on the resin compositions.

**Table 2**

| Abbreviation | polyolefin resin and its characteristics |
|---|---|
| LLDPE | Linear low-density polyethylene (density: 0.92, MFR (190°C, 1.9 kg/cm²): 2.1, Vicat softening point: 102°C) |
| PPC | Propylene-α-olefin copolymer (density: 0.89, MFR (230°C, 2.16 kg/cm²): 3.0, flexural modulus: 490 MPa) |
| EOC | Ethylene-propylene copolymer elastomer (density: 0.88, MFR (190°C, 1.9 kg/cm²): 1.0, stiffness (JIS-A): 63) |
| PVC | soft polyvinyl chloride resin (density: 1.20, polymerization degree: 2,500, plasticizer (DEHP) content:56 % by weight) |
| MFR: melt flow rate (g/10MIN) | |

### Example 1-7

### Production and evaluation of single-chamber container

### 1) Preparation of resin blend

The block terpolymers and polyolefin resins obtained in reference example 1 were mixed and melted together at a temperature of 250 to 280°C by a double-screw melt extruder and pelletized to prepare a resin blend pellet as shown in Table 3.

**Table 3**

| Abbreviation | Resin blend constituents (weight ratio) |
|---|---|
| P1 (Comparative Example) | PPC : C1 = 80 : 20 |
| P2 (Example) | EOC : C2 = 50 : 50 |
| P3 (Example) | PPC : C3 = 80 : 20 |
| P4 (Example) | PPC : C3 = 50 : 50 |
| P5 (Comparative Example) | PPC : C3 = 30 : 70 |
| P6 (Example) | EOC : C3 = 50 : 50 |
| P7 (Example) | LLDPE : C3 = 80 : 20 |
| P8 (Comparative Example) | PPC : C0 = 50 : 50 |
| Q1 (Comparative Example) | LLDPE : EOC = 80 : 20 |
| Q2 (Comparative Example) | PPC : EOC = 80 : 20 |
| Q3 (Comparative Example) | PPC : EOC = 30 : 70 |

### 2) Preparation of film

Resin compositions shown in Table 3 were used to produce a single-layer film or three-layered film having a thickness of 200 µm and a width of 200 mm at a temperature of 160 to 250°C by an extrusion T-die molding machine for the single-layer film and a coextrusion T-die molding machine for the three-layered film. The structure of the films is shown in Table 4.

**Table 4**

| Sample | Film construction(thickness µm) |
|---|---|
| Example 1 | Single layer P2 (200) |
| Example 2 | Single layer P3 (200) |
| Example 3 | Single layer P4 (200) |
| Example 4 | Outer layer P3 (50) / intermediate layer Q3 (100) / inner layer P3 (50) |
| Example 5 | Outer layer PPC (50) / intermediate layer P5 (100) / inner layer P4 (50) |
| Example 6 | Outer layer PPC (50) / intermediate layer P5 (100) / inner layer P7 (50) |
| Example 7 | Outer layer PPC (50) / intermediate layer P6 (100) / inner layer Q2 (50) |
| Comparative example 1 | Single layer PPC (200) |
| Comparative example 2 | Single layer P1 (200) |
| Comparative example 3 | Single layer Q1 (200) |
| Comparative example 4 | Outer layer PPC (50) / intermediate layer Q3 (100) / inner layer P8 (50) |

### 3) Preparation of single-chamber container

A single-layer film or three-layer film prepared by the above-described process 2) was cut into pieces 200 mm wide x 400 mm long and two of the films were laminated together such that the resins of the present invention became an inner surface with each other. The three directional ends of the laminates were thermally welded in a width of 10mm at a temperature of 180 to 230°C,to prepare bags. The bags were filled with 1,000 ml of distilled water and sealed by thermal welding to prepare single-chamber containers. These single chambers were subjected to high-pressure steam sterilization at 121°C and a gauge pressure of 1.5 kg/cm² for 30 minutes followed by natural cooling to room temperature and were used below as single-containers.

### 4) Evaluation of single-chamber containers

On the single-chamber containers after high-pressure steam sterilization, the following tests were carried out.

### (a) Appearance

Appearance of the single-chamber containers was observed. The single-chamber containers of the present invention showed no remarkable deformations or changes in color, etc., which indicated excellent heat resistance thereof.

However, the container (Comparative Example 3), which was a blend of conventional polyolefin resins and comprised essentially of linear low density polyethylene, was broken completely.

### (b) Evaluation of medical safety

For samples other than Comparative Example 3 described above which is not durable for high-pressure steam sterilization, an elute test was conducted on the basis of a polyethylene or polypropylene container for an aqueous agent to be injected in accordance with the plastic medical container test method of the Japanese Pharmacopoeia. The results are shown in Table 5.

### (c) Measurement of tensile modulus

The tensile modulus was measured in accordance with JIS K7113 using an autograph (AG-500D) of Shimadzu Corporation. The results are shown in Table 6.

### (d) Film transparency test

Transmittance of light having a wavelength of 450 nm under water was evaluated in accordance with the Test Method for Plastic Medical Container of the 13th revision of the Japanese Pharmacopoeia using a spectrophotometer (U-3210) of Hitachi, Ltd. The results are shown in Table 5.

**Table 5**

| | Appearance | | Difference in pH | Bubbling | Residue after evaporation | Difference in KMnO₄ consumption | UV radiation absorption | |
|---|---|---|---|---|---|---|---|---|
| | Contaminant | Color | | | | | 220∼ 240nm | 241∼ 350nm |
| Standard | None | Clear transparency | 1.5 or less | Within 180 seconds | 1 mg or less | 1.0 ml or less | 0.08 or less | 0.05 or less |
| Example 1 | None | ○ | 0.3 | 39˝ | 0.7 | 0.3 | 0.05 | 0.03 |
| Example 2 | None | ○ | 0.2 | 10˝ | 0.1 | 0.1 | 0.02 | 0.01 |
| Example 3 | None | ○ | 0.2 | 25˝ | 0.2 | 0.1 | 0.01 | 0.01 |
| Example 4 | None | ○ | 0.1 | 45˝ | 0.1 | 0.3 | 0.01 | 0.02 |
| Example 5 | None | ○ | 0.2 | 15˝ | 0.5 | 0.1 | 0.03 | 0.03 |
| Example 6 | None | ○ | 0.6 | 10˝ | 0.3 | 0.2 | 0.01 | 0.01 |
| Example 7 | None | ○ | 0.4 | 30˝ | 0.1 | 0.3 | 0.02 | 0.02 |
| Comparative example 1 | None | ○ | 0.2 | 10˝ | 0.1 | 0.1 | 0.01 | 0.01 |
| Comparative example 2 | None | ○ | 0.1 | 101˝ | 0.5 | 0.3 | 0.06 | 0.03 |
| Comparative example 3 | -- | - | - | - | - | - | - | - |
| Comparative example 4 | None | ○ | 1.1 | 90˝ | 0.8 | 1.9 | 0.07 | 0.04 |
| *○: achromatic and transparent | | | | | | | | |

As shown in Table 5, all of the single-chamber containers of the present invention passed the above elute test. On the other hand, the film using a polyolefin resin blended with non-hydrogenated product did not pass the test.

**Table 6**

| Sample | Tensile modulus (Mpa) | Light transmittance (%) |
|---|---|---|
| Example 1 | 204 | 91 |
| Example 2 | 170 | 91 |
| Example 3 | 120 | 88 |
| Example 4 | 152 | 89 |
| Example 5 | 126 | 88 |
| Example 6 | 118 | 88 |
| Example 7 | 108 | 89 |
| Comparative Example 1 | 240 | 86 |
| Comparative Example 2 | 334 | 87 |
| Comparative Example 3 | --- | -- |
| Comparative Example 4 | 126 | <55 |

As shown in Table 6, it was indicated that the single-chamber containers of the present invention showed higher flexibility than the containers in which conventional polyolefin resins were used (Comparative Examples 1, 2) and the same or higher transparency compared to the Comparative Examples even after high-pressure steam sterilization.

However, Comparative Example 4 in which a polyolefin resin blended with non-hydrogenated product showed a remarkable decrease in transparency after sterilization.

From the above results, it is understood that mixing of the hydrogenated terpolymer of the present invention can give a film having satisfactory characteristics of each of heat resistance, flexibility and transparency.

### Example 8-9

### Preparation and evaluation of tube

### 1) Preparation of single layer tube and multi-layer tube

As an example of a tube for a circuit, a single layer tube and a multi-layer tube having inner diameter of 4.0 mm was prepared using a resin having the formulation as shown in Table 7, with a single tube extrusion molding machine or three-layer coextrusion molding machine at a temperature of 160 to 250°C

**Table 7**

| Sample | Tube construction (layer thickness µm) |
|---|---|
| Example 8 | Outer layer P3 (30) / intermediate layer P6 (1000) / inner layer P3 (30) |
| Example 9 | Outer layer P3 (50) / intermediate layer P6 (1000) / inner layer P4 (30) |
| Comparative Example 5 | Single layer PPC (1100) |
| Comparative Example 6 | Single layer PVC(1100) |

### 2) High-pressure steam sterilization treatment

For evaluation of resistance to sterilization of the prepared tubes, high-pressure steam sterilization treatment was conducted at the temperature of 121°C and a gauge pressure of 1.5 kG/cm² for 30 minutes and the tubes were left to cool to room temperature.

### 3) Evaluation of tubes

### (a) Appearance

Tube samples using the film of the present invention showed no remarkable deformations or changes in color, etc. after sterilization, which indicated excellent resistance to sterilization thereof.

### (b) Measurement of tensile modulus

The tensile modulus was measured in accordance with JIS K7113 using an autograph (AG-500D) of Shimadzu Corporation. The results are shown in Table 8.

**Table 8**

| Sample | Tensile modulus (MPa) |
|---|---|
| Example 8 | 11.3 |
| Example 9 | 7.3 |
| Comparative example 5 | 240.0 |
| Comparative example 6 | 7.8 |

It was shown that the tubes prepared from the resin compositions of the present invention showed flexibility which was higher than that of the conventional polyolefin resin (PPC) of Comparative Example 5 and the same as that of non-rigid polyvinyl chloride resin after high-pressure steam sterilization (Comparative Example 6).

From the above results, it was shown that, by mixing a hydrogenated product of a block terpolymer with a conventional polyolefin resin, a tube for medical use having both flexibility and heat resistance durable for high-pressure steam sterilization, which was not obtained from conventional polyolefin resins, could be prepared.

### Example 10-14

### Production and evaluation of multi-chamber containers

### 1) Preparation of blend resins

Resin pellets obtained by mixing two or three resins shown in Table 3 were melted and mixed together at a temperature of 160 to 220°C by a double-screw melt extruder and pelletized to prepare blend resin pellets.

**Table 9**

| Abbreviation | Composition of blend resin (weight ratio) |
|---|---|
| P1(Example) | PPC : C1 = 70 : 30 |
| P2(Comparative Example) | PPC : C1 = 70 : 30 |
| P3(Example) | PPC : C1 : C2 = 60 : 20 : 20 |
| P4(Comparative Example) | PPC : C2 = 30 : 70 |
| P5(Comparative Example) | PPC : C0 = 70 : 30 |
| Q1(Comparative Example) | PPC : EOC = 70 : 30 |
| Q2(Comparative Example) | PPC : EOC = 30 : 70 |

### 2) Preparation of easy-peelable film

Blend resins shown in Table 9 were used to produce a single-layer film or three-layer film having a thickness of 200 µm and a width of 200 mm at a temperature of 160 to 250°C by an extrusion T-die molding machine for the single-layer film and a coextrusion T-die molding machine for the three-layer film. The structures of the films are shown in Table 10.

**Table 10**

| sample | film structure (layer thickness µm) |
|---|---|
| Example 10 | single layer P1 (200) |
| Example 11 | single layer P3 (200) |
| Example 12 | outer layer PPC (50) / intermediate layer P4(100) / inner layer P1(50) |
| Example 13 | outer layer PPC (50) / intermediate layer P4(100) / inner layer P3(50) |
| Example 14 | outer layer P3 (50) / intermediate layer Q2(100) / inner layer P3(50) |
| Comparative Example 7 | single layer P2 (200) |
| Comparative Example 8 | single layer P5 (200) |
| Comparative Example 9 | outer layer PPC (50) / intermediate layer Q2(100) / inner layer Q1(50) |

### 3) Preparation of multi-chamber containers

The single-layer films or three-layer films formed by the above process were cut into a size of 200 mm in width x 500 mm in length and two of the film were laminated together such that the easy-peelable film layer (the innermost layer of the three-layer film) of the present invention became an inner wall surface, and the ends in two directions of the laminate were strongly thermally welded in a width of 10 mm at a temperature of 180 to 200°C and a pressure of 5.0 kg/cm² for 10 seconds. Further, the center of the film was weakly thermally welded in a width of 10 mm at a temperature of 130 to 170°C and a pressure of 5.0 kg/cm² for 10 seconds to form a peelable barrier. Each of the chambers of the multi-chamber container consisting of two chambers having the same volume was filled with 500 ml of distilled water and a filling port was sealed up by strong thermal welding.

### 4) Evacuation of easy-peelable films and multi-chamber containers

### (a) Evaluation of medical safety

An elute test was conducted on the prepared easy-peelable films on the basis of a polyethylene or polypropylene container for an aqueous agent to be injected in accordance with the plastic medical container test method of the Japanese Pharmacopoeia. The results are shown in Table 11.

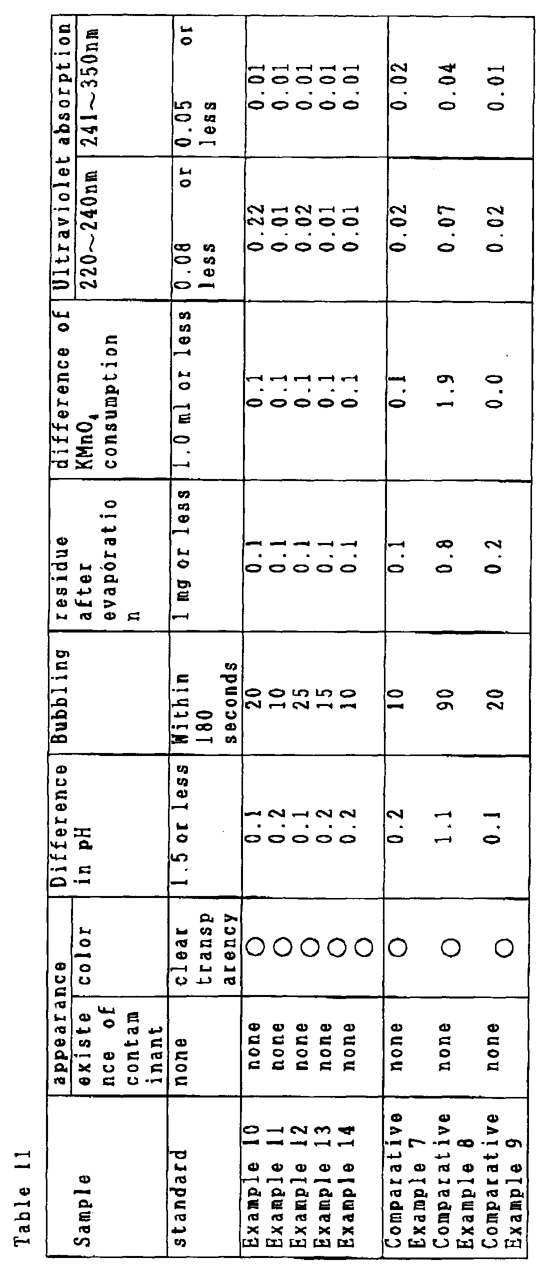

As shown in Table 11, all of the easy-peelable films of the present invention passed the above elute test. On the other hand, the film comprising the non-hydrogenated product of Comparative Example 2 did not pass the test.

### (b) Measurement of tensile modulus

The tensile modulus of an easy-peelable films subjected to 30 minutes of high-pressure steam sterilization at a temperature of 121°C and a pressure of 1.5 kg/cm² was measured in accordance with JIS K7113 using an autograph (AG-500D) of Shimadzu Corporation. The results are shown in Table 12.

As shown in Table 12 below, the easy-peelable films of the present invention retained high flexibility after high-pressure steam sterilization. However, a film formed from a blend resin consisting of 30 % by weight of butadiene and 70 % by weight of a block terpolymer (Comparative Example 1) could not obtain sufficient flexibility.

### (c) Measurement of T-peel strength

An 180° T-peel test was conducted on a film width of 15 mm at a test speed of 300 mm/min to measure the peel strength of an easy-peelable portion of a multi-chamber containers subjected to high-pressure steam sterilization under the above conditions. The results are shown in Table 12.

As is obvious from Table 12, the multi-chamber containers comprising the easy-peelable film of the present invention can obtain stable peel strength after sterilization. However, a great increase in peel strength was seen in a multi-chamber container comprising a film formed only from the conventional polyolefin resin of Comparative Example 9 after sterilization.

### (d) Film transparency test

Multi-chamber containers subjected to high-pressure steam sterilization under the above conditions were evaluated for transmittance of light having a wavelength of 450 nm under water in accordance with the "Test Method for Plastic Medical Containers" of the 13th revision of the Japanese Pharmacopoeia using the spectrophotometer (U-3210) of Hitachi, Ltd. The results are shown in Table 12.

As is obvious from Table 12 below, the multi-chamber containers of the present invention retain transparency after high-pressure steam sterilization. However, a marked reduction in transparency was seen in a multi-chamber container comprising a film formed from a blend resin containing a non-hydrogenated block terpolymer of a cyclic conjugated diene, linear conjugated diene and cyclic conjugated diene of Comparative Example 8 after high-pressure steam sterilization.

**Table 12**

| Sample | tensile modulus (Mpa) | T-peel strength (Kgf/15mm) | light transmittance(%) |
|---|---|---|---|
| Example 10 | 270 | 0.4 | 87 |
| Example 11 | 168 | 0.3 | 87 |
| Example 12 | 164 | 0.5 | 88 |
| Example 13 | 138 | 0.4 | 89 |
| Example 14 | 120 | 0.4 | 89 |
| Comparative Example 7 | 310 | 0.6 | 89 |
| Comparative Example 8 | 170 | 0.6 | <55 |
| Comparative Example 9 | 138 | 2.1 | 87 |

### Effect of the Invention

The molded product for medical use of the present invention has flexibility, transparency, and heat resistance by which characteristics similar to polyolefin resins can be maintained after sterilization. Such characteristics allow the molded product of the present invention to be used for implements for blood transfusion, transfusion, collecting blood, circulating liquid extracorporeally, transporting powdery or liquid medicines, preserving medicines, or keeping waste liquids of medicines etc., or packaging of implements thereof or packaging of medicines.

The present invention provides molded products for medical use in which stiffness and flexibility can be widely controlled, and which have excellent transparency, heat resistance, resistance to sterilization, medical safety, and further disposability after use, particularly containers such as transfusion bags, tubes such as tubes for transfusion set, tubes for blood circuits, and a wide variety of catheters, or injection molded parts such as a stopper of implements thereof.

In the present invention, a peelable film and a flexible container having excellent flexibility and transparency and retaining appropriate peel strength after high-pressure steam sterilization can be prepared.

## Claims

1. A molded product for medical use comprising a molded product of a resin composition which is a mixture of (A) polyolefin resin and (B) a hydrogenated product of a block terpolymer of a cyclic conjugated diene monomer, linear conjugated diene monomer and cyclic conjugated diene monomer, wherein said (B) hydrogenated product comprises 30 to 90% by weight of said linear conjugated diene polymer block, and wherein a ratio of (A)/(B) is 50/50 to 95/5 by weight.

2. The molded product for medical use according to claim 1, wherein said (B) hydrogenated product has a number average molecular weight of 10,000 to 5,000,000 and a softening point of 130 to 170°C.

3. The molded product for medical use according to claim 1, wherein the cyclic conjugated diene monomer of said (B) hydrogenated product is a cyclic conjugated diene monomer having a 5- to 8-membered ring constituted by carbon-carbon bonds.

4. The molded product for medical use according to claim 1, wherein the linear conjugated diene monomer of said (B) hydrogenated product is butadiene.

5. The molded product for medical use according to claim 1, wherein a hydrogenation percentage of said (B) hydrogenated product of a block terpolymer of a cyclic conjugated diene monomer, linear conjugated diene monomer and cyclic conjugated diene monomer is at least 90%.

6. The molded product for medical use according to claim 1, wherein the polyolefin resin is at least one olefin polymer selected from the group consisting of polypropylene, polyethylene, polybutene, ethylene α-olefin copolymer, ethylene vinylalcohol copolymer, ethylene vinylacetate copolymer, poly-4-methylpentene-1 resin, propylene α-olefin copolymer and a polymer blend of two or more thereof.

7. The molding product for medical use according to claim 1, wherein the polyolefin resin is propylene α-olefin copolymer or ethylene propylene copolymer elastomer.

8. The molding product for medical use according to claim 1, wherein the polyolefin resin has a molecular weight of 10,000 to 5,000,000 and a melting point of 170 to 220°C.

9. The molded product for medical use according to claim 1, wherein the molded product is in the form of film, sheet, tube or bag.

10. The molded product for medical use according to claim 1, wherein the product is a multi-layered molded product.

11. The molded product for medical use according to claim 1, wherein the product is a flexible container having easy-to-peel openability.

12. The molded product according to claim 11, wherein said flexible container is peripherally sealed and has a plurality of chambers defined one from another by an easily peelable seal zone.

13. The molded product according to claim 12, wherein the easily peelable seal zone is formed by welding opposite inner walls of the container.

14. The molded product according to claim 11, wherein the flexible container is a liquid transfusion bag.

15. The molded product according to claim 1, wherein a molded product is a vessel for containing medical liquid and a mouth portion of the container is sealed hermetically by an easily peelable seal zone.

16. The molded product according to claim 12, wherein the easily peelable seal zone is formed by welding opposite inner walls of the mouth portion of the container.
